(19) Europäisches Patentamt
European Patent Office
Office européen des brevets

(11) **EP 4 339 305 A1**

(12) **EUROPEAN PATENT APPLICATION**
published in accordance with Art. 153(4) EPC

(43) Date of publication:
**20.03.2024 Bulletin 2024/12**

(21) Application number: **22878229.8**

(22) Date of filing: **29.08.2022**

(51) International Patent Classification (IPC):
**C21D 8/10** [(2006.01)]   **C22C 38/00** [(2006.01)]
**C22C 38/34** [(2006.01)]   **C22C 38/54** [(2006.01)]

(52) Cooperative Patent Classification (CPC):
**C21D 8/10; C22C 38/00; C22C 38/34; C22C 38/54;**
Y02E 60/50; Y02P 70/50

(86) International application number:
**PCT/JP2022/032432**

(87) International publication number:
**WO 2023/058358 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.10.2021 JP 2021165765**

(71) Applicant: **NIPPON STEEL Stainless Steel
Corporation
Tokyo 100-0005 (JP)**

(72) Inventors:
• **KOBAYASHI,Ryo
Tokyo 100-0005 (JP)**
• **HATANO,Masaharu
Tokyo 100-0005 (JP)**

(74) Representative: **Vossius & Partner
Patentanwälte Rechtsanwälte mbB
Siebertstrasse 3
81675 München (DE)**

(54) **FERRITIC STAINLESS STEEL PIPE AND METHOD FOR PRODUCING SAME, AND FUEL CELL**

(57)  A ferritic stainless steel pipe having a composition containing, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, the balance being Fe and impurities. In a cross section of the ferritic stainless steel pipe perpendicular to a pipe extending direction, an area ratio of crystal grains having a <110> orientation is 21.0% or less, and a maximum area of the crystal grains is 145,000 $\mu m^2$ or less.

**EP 4 339 305 A1**

**Description**

[Field of the Invention]

The present invention relates to a ferritic stainless steel pipe, a method for producing the same, and a fuel cell.

[Background of the Invention]

Recently, the depletion of fossil fuels such as petroleum and the global warming phenomenon caused by $CO_2$ emissions have accelerated the spread of new systems that can replace conventional power generation systems. One of such systems is the "fuel cell," which is attracting attention for its high practical value as a distributed power source and as a source of power for automobiles. There are several types of fuel cells, among which polymer electrolyte fuel cells (PEFCs) and solid oxide fuel cells (SOFCs) are promising for future expansion due to their high energy efficiency.
The fuel cell is a device that generates electricity through a reaction process opposite to the electrolysis of water, and requires hydrogen. Hydrogen is produced by reforming hydrocarbon fuels such as city gas (LNG), methane, natural gas, propane, kerosene, and gasoline in the presence of a catalyst in a fuel reformer. Among these, fuel cells that use city gas as raw fuel have the advantage of being able to use hydrogen in areas with city gas piping.
Components used for fuel cells are often exposed to harsh environments. For example, fuel reformers are usually operated at an elevated temperature of 200 to 900°C to ensure the heat amount required for the hydrogen reforming reaction. Under such an elevated temperature operation, they are exposed to an oxidizing atmosphere containing large amounts of water vapor, carbon dioxide, carbon monoxide, and the like, and the heating and cooling cycles are repeated by starting and stopping depending on demands for hydrogen. Therefore, Al-containing ferritic stainless steel with improved heat resistance is used for the components used for the fuel cells (e.g., Patent Literatures 1-7).

[Prior Art]

[Patent Literatures]

[PTL 1]
Japanese Patent Application Publication No. 2010-222638 A
[PTL 2]
WO 2015/064739 A1
[PTL 3]
Japanese Patent Application Publication No. 2016-030854 A
[PTL 4]
Japanese Patent Application Publication No. 2016-030855 A
[PTL 5]
Japanese Patent Application Publication No. 2016-211076 A
[PTL 6]
WO 2017/073093 A1
[PTL 7]
WO 2017/073094 A1

[Summary of the Invention]

[Problem to be Solved by the Invention]

Various types of pipes are used for the fuel cells, such as pipes for feeding raw fuel to the fuel reformer and pipes for supporting a catalyst. The pipe used for feeding raw fuel to the fuel reformer is required to be resistant to deformation because the deformation makes it difficult to stably feed a predetermined amount of raw fuel. Also, the pipe for supporting the catalyst is required to be difficult to deform because the deformation makes it easy for the catalyst to fall out.
Further, the fuel cells are used in a variety of locations, and impacts during transportation and installation, especially in cold climates, can cause cracking and deformation of various types of pipes. Therefore, the fuel cells are required to be resistant to cracking and deformation caused by impacts in low temperature environments.
The present invention is made to solve the above problems. An object of the present invention is to provide a ferritic stainless steel pipe that is free from cracking and less deformed upon impact application even in low temperature environments, and a method for producing the same.

Also, an object of the present invention is to provide a fuel cell in which the function of the ferritic stainless steel pipe is difficult to be degraded upon impact application even in low temperature environments.

[Means for Solving the Problem]

As a result of intensive studies for ferritic stainless steel pipes made of base metals having various compositions, the present inventors have found that cracking upon impact application occurs mainly around grains having a <110> orientation in a cross section perpendicular to a pipe extending direction. Based on the findings, the present inventors have found that cracking and deformation of ferritic stainless steel pipes could be suppressed by controlling a maximum area and an area ratio of the grains having the <110> orientation in the cross section perpendicular to the pipe extending direction, in addition to the compositions of the ferritic stainless steel pipes, and they have completed the present invention. The present inventors have also found that ferritic stainless steel pipes having such characteristics can be obtained by welding both end portions in a width direction of the base metal having the specific composition to produce an original pipe, and then cold-drawing the original pipe, and they have completed the present invention.

Thus, the present invention relates to a ferritic stainless steel pipe having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, the balance being Fe and impurities, wherein, in a cross section of the ferritic stainless steel pipe perpendicular to a pipe extending direction, an area ratio of crystal grains having a <110> orientation is 21.0% or less, and a maximum area of the crystal grains is 145,000 $\mu m^2$ or less.

The present invention also relates to a method for producing a ferritic stainless steel pipe, the method comprising:

a welding step of welding both end portions in a width direction of a base metal to obtain an original pipe, the base metal having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, B: 0.0001 to 0.0100%, the balance being Fe and impurities; and

a drawing step of cold-drawing the original pipe at a reduction of area of 30% or more to extend the original pipe, wherein a heat treatment step is not performed after the drawing step.

The present invention also relates to a method for producing a ferritic stainless steel pipe, the method comprising:

a welding step of welding both end portions in a width direction of a base metal to obtain an original pipe, the base metal having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, B: 0.0001 to 0.0100%, the balance being Fe and impurities;

a drawing step of cold-drawing the original pipe at a reduction of area of 30% or more to extend the original pipe; and

a heat treatment step of performing a heat treatment at a temperature of 950°C or less after the drawing step.

Furthermore, the present invention relates to a fuel cell comprising the ferritic stainless steel pipe.

[Detailed Description of the Invention]

According to the present invention, it is possible to provide a ferritic stainless steel pipe that is free from cracking and less deformed upon impact application even in low temperature environments, and a method for producing the same.

Also, according to the present invention, it is possible to provide a fuel cell in which the function of the ferritic stainless steel pipe is difficult to be degraded upon impact application even in low temperature environments.

[Description of Embodiments]

Hereinafter, embodiments of the present invention will be specifically described. It is to understand that the present invention is not limited to the following embodiments, and those which have appropriately added changes, improvements and the like to the following embodiments based on knowledge of a person skilled in the art without departing from the spirit of the present invention fall within the scope of the present invention.

It should be noted that, as used herein, the expression "%" in relation to any component means "% by mass", unless otherwise specified.

A ferritic stainless steel pipe according to an embodiment of the present invention is made of a base metal having a composition containing, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, B: 0.0001 to 0.0100%, the balance being Fe and impurities.

As used herein, the term "impurities" means components which are contaminated due to various factors such as raw materials including ore and scrap, and production steps, when the ferritic stainless steel pipe is industrially produced, and which are acceptable in a range that does not adversely affect the present invention. For example, the impurities include unavoidable impurities.

The term "ferritic" as used herein means that the metal structure is mainly made of ferrite phases at ordinary temperature. Therefore, the "ferritic" includes those containing minor amounts of phases other than the ferrite phase (for example, austenite phases, martensite phases, etc.).

Furthermore, with respect to the content of each element as used herein, containing or comprising "xx % or less" means that it contains xx % or less but contains an amount more than 0% (especially, more than the impurity level).

Also, the ferritic stainless steel pipe according to an embodiment of the present invention can further contain one or more selected from Sn: 0.100% or less, Mg: 0.0100% or less, Ca: 0.0100% or less. Therefore, the ferritic stainless steel pipe according to the present invention can be expressed as having a composition containing C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, and further containing one or more selected from Sn: 0 to 0.100%, Mg: 0 to 0.0100%, Ca: 0 to 0.0100%, the balance being Fe and impurities.

Here, with regard to the content of each element in this specification, containing or comprising "0 to xx %" is a concept encompassing that it is xx % or less, but also 0% is inclusive (where it is not contained).

Furthermore, the ferritic stainless steel pipe according to the present invention can further contain one or more selected from Ni: 1.00% or less, Cu: 1.00% or less, Nb: 1.00% or less, Ti: 1.00% or less, Zr: 0.500% or less, La: 0.500% or less, and Ce: 0.500% or less. Therefore, the ferritic stainless steel pipe according to the present invention can be expressed as having a composition further containing C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, and further containing Ni: 0 to 1.00%, Cu: 0 to 1.00%, Nb: 0 to 1.00%, Ti: 0 to 1.00%, Zr: 0 to 0.500%, La: 0 to 0.500%, and Ce: 0 to 0.500%, the balance being Fe and impurities. Also, the ferritic stainless steel pipe according to an embodiment of the present invention can also be expressed as having a composition further containing: C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, and further containing: (i) one or more selected from Sn: 0 to 0.100%, Mg: 0 to 0.0100%, Ca: 0 to 0.0100%, and/or (ii) Ni: 0 to 1.00%, Cu: 0 to 1.00%, Nb: 0 to 1.00%, Ti: 0 to 1.00%, Zr: 0 to 0.500%, La: 0 to 0.500%, and Ce: 0 to 0.500%, the balance being Fe and impurities.

Each component will be described in detail below.

<C: 0.050% or less>

C is an element that solidly dissolves in the ferrite phase or forms Cr carbides to inhibit oxidation resistance, and promotes the formation of Cr carbides at grain boundaries during welding. Therefore, a lower C content is preferable. Therefore, the upper limit of the C content is controlled to 0.050%, preferably 0.048%, more preferably 0.045%, and even more preferably 0.043%. On the other hand, the lower limit of the C content is not particularly limited, but excessive reduction of the C content leads to higher refining costs. Therefore, the lower limit of the C content is preferably 0.001%, more preferably 0.003%, and even more preferably 0.005%.

<Si: 3.0% or less>

Si is an element that is effective for deoxidization and improves oxidation resistance. However, an excessive high Si content decreases toughness and workability. Therefore, the upper limit of the Si content is controlled to 3.0%, preferably 2.8%, more preferably 2.5%, and even more preferably 2.0%. On the other hand, the lower limit of the Si content is not particularly limited, but it is preferably 0.01%, more preferably 0.1%, and even more preferably 0.3%, in order to obtain the above effects of Si.

<Mn: 1.00% or less>

Since Mn is an element that inhibits oxidation resistance, a lower Mn content is preferable. Therefore, the upper limit of the Mn content is controlled to 1.00%, preferably 0.95%, more preferably 0.90%, and even more preferably 0.88%. On the other hand, the lower limit of the Mn content is not particularly limited, but excessive reduction of the Mn content leads to higher refining costs. Therefore, the lower limit of the Mn content is preferably 0.01%, more preferably 0.05%, and even more preferably 0.10%.

<P: 0.060% or less>

Since P is an element that inhibits producibility and weldability, a lower P content is preferable. Therefore, the upper limit of the P content is controlled to 0.060%, preferably 0.058%, and more preferably 0.055%. On the other hand, the lower limit of the P content is not particularly limited, but excessive reduction of the P content leads to higher refining costs. Therefore, the lower limit of the P content is preferably 0.005% and more preferably 0.010%.

<S: 0.0100% or less>

Since S is an element that decreases oxidation resistance and hot workability, a lower S content is preferable. Therefore, the upper limit of the S content is controlled to 0.0100%, preferably 0.0080%, and more preferably 0.0060%. On the other hand, the lower limit of the S content is not particularly limited, but excessive reduction of the S content leads to higher refining costs. Therefore, the lower limit of the S content is preferably 0.0001% and more preferably 0.0002%.

< Cr: 14.0 to 25.0%>

Cr is a basic element for ensuring oxidation resistance in addition to corrosion resistance. To obtain this effect of Cr, the lower limit of the Cr the content is controlled to 14.0%, preferably 15.0%, and more preferably 16.0%. On the other hand, an excessive high Cr content promotes the formation of σ phase, an embrittled phase, when exposed to a high temperature environment, and also increases the cost and causes Cr evaporation, which reduces the oxidation resistance. Therefore, the upper limit of the Cr content is controlled to 25.0%, preferably 23.0%, more preferably 21.0%, and even more preferably 19.0%.

<Al: 5.0% or less>

Al is an element that is effective for deoxidization and improves oxidation resistance. However, if the Al content is too high, toughness and weldability are reduced. Therefore, the upper limit of the Al content is controlled to 5.0%, preferably 4.5%, more preferably 4.0%, and even more preferably 3.3%. On the other hand, the lower limit of the Al content is not particularly limited, but it is preferably 0.1%, more preferably 0.5%, even more preferably 1.0%, and particularly preferably 1.3%, in order to obtain the above effects of Al.

<N: 0.050% or less>

Since N, as with C, is an element that decreases oxidation resistance, a lower N content is preferable. Therefore, the upper limit of the N content is controlled to 0.050%, preferably 0.040%, and more preferably 0.030%. On the other hand, the lower limit of the N content is not particularly limited, but excessive reduction of the N content leads to higher refining costs. Therefore, the lower limit of the N content is preferably 0.001%, more preferably 0.003%, and even more preferably 0.005%.

<B: 0.0001 to 0.0100%>

B is an element that segregates at grain boundaries to increase grain boundary strength, and improves impact resistance and deformation resistance. To obtain these effects of B, the lower limit of the B content is controlled to 0.0001%, preferably 0.0002%, and more preferably 0.0003%. On the other hand, if the B content is too high, fracture origins increase due to coarsening of inclusions and deposition of deposits. Therefore, the upper limit of the B content is controlled to 0.0100%, preferably 0.0080%, more preferably 0.0060%, and even more preferably 0.0049%.

<Sn: 0.100% or less>

Sn is an element that affects impact resistance and deformation resistance, and is optionally contained. As with B, Sn can segregate at grain boundaries and increase grain boundary strength, but if the Sn content is too high, the number of fracture origins increases due to coarsening of inclusions and deposition of deposits. Therefore, the upper limit of the Sn content is controlled to 0.100%, preferably 0.090%, and more preferably 0.080%. On the other hand, the lower limit of the Sn content is not particularly limited, but it is preferably 0.001%, more preferably 0.005%, and even more preferably 0.010%, in order to obtain the above effects of Sn.

<Mg: 0.0100% or less>

Mg is an element that promotes grain boundary segregation of B by increasing grain boundary cleanliness through the formation of inclusions (e.g., oxides and sulfides), and is optionally contained. The Mg inclusions also act as solidification nuclei during welding to suppress coarsening of the welded microstructure and improve impact resistance. However, if the Mg content is too high, the fracture origins increase due to coarsening of inclusions and deposition of deposits. Therefore, the upper limit of the Mg content is controlled to 0.0100%, preferably 0.0080%, more preferably 0.0060%, and even more preferably 0.0049%. On the other hand, the lower limit of the Mg content is not particularly limited, but it is preferably 0.00001%, more preferably 0.00005%, and even more preferably 0.0001%, in order to obtain the above effects of Mg.

Since Mg is related to grain boundary segregation of B, when Mg is included, the total amount of B and Mg is preferably 0.0040 to 0.0050%. By controlling the amount in such a range, the above effects of B and Mg can stably be ensured.

<Ca: 0.0100% or less>

Ca is an element that improves hot workability and cleanliness, and is optionally contained. However, if the Ca content is too high, the producibility and oxidation resistance will decrease due to the formation of water-soluble inclusions (e.g., CaS). Therefore, the upper limit of the Ca content is controlled to 0.0100%, preferably 0.0080%, and more preferably 0.0050%. On the other hand, the lower limit of the Ca content is not particularly limited, but it is preferably 0.00001%, more preferably 0.00005%, and even more preferably 0.0001%, in order to obtain the above effects of Ca.

<Ni: 1.00% or less>

Ni is an element that improves high temperature strength and corrosion resistance and is optionally contained. However, an excessively high Ni content leads to higher production costs and inhibition of producibility. Therefore, the upper limit of the Ni content is controlled to 1.00%, preferably 0.80%, and more preferably 0.60%. On the other hand, the lower limit of the Ni content is not particularly limited, but it is preferably 0.01% and more preferably 0.03%, in order to obtain the above effects of Ni.

<Cu: 1.00% or less>

Cu, as with Ni, is an element that improves high temperature strength and corrosion resistance, and is optionally contained. However, an excessively high Cu content leads to higher production costs and inhibition of producibility. Therefore, the upper limit of the Cu content is controlled to 1.00%, preferably 0.50%, and more preferably 0.30%. On the other hand, the lower limit of the Cu content is not particularly limited, but it is preferably 0.01% and more preferably 0.02%, in order to obtain the above effects of Cu.

<Nb: 1.00% or less>

Nb is an element that improves oxidation resistance by fixing C and N, and is optionally contained. Nb also forms precipitates, which act as solidification nuclei during welding to suppress coarsening of the welded microstructure and improve impact resistance. However, an excessively high Nb content leads to higher production costs and inhibition of producibility. Therefore, the upper limit of the Nb content is controlled to 1.00%, preferably 0.80%, and more preferably 0.60%. On the other hand, the lower limit of the Nb content is not particularly limited, but it is preferably 0.01% and more preferably 0.03%, in order to obtain the above effects of Nb.

<Ti: 1.00% or less>

Ti is an element that improves oxidation resistance by fixing C and N, and is optionally contained. Ti also forms precipitates, which act as solidification nuclei during welding to suppress coarsening of the welded microstructure and improve impact resistance. However, an excessively high Ti content leads to higher production costs and inhibition of producibility. Therefore, the upper limit of the Ti content is controlled to 1.00%, preferably 0.80%, and more preferably 0.60%. On the other hand, the lower limit of the Ti content is not particularly limited, but it is preferably 0.01% and more preferably 0.03%, in order to obtain the above effects of Ti.

<Zr: 0.500% or less>

Zr is an element that improves hot workability and cleanliness, and is optionally contained. However, an excessively high Zr content leads to higher production costs and hindrance of producibility. Therefore, the upper limit of the Zr content is controlled to 0.500%, preferably 0.400%, and more preferably 0.300%. On the other hand, the lower limit of the Zr content is not particularly limited, but it is preferably 0.0001% and more preferably 0.001%, in order to obtain the above effects of Zr.

<La: 0.500% or less>

La is an element that improves hot workability and cleanliness, and is optionally contained. However, an excessively high La content leads to higher production costs and hindrance of producibility. Therefore, the upper limit of the La content is controlled to 0.500%, preferably 0.400%, and more preferably 0.300%. On the other hand, the lower limit of the La content is not particularly limited, but it is preferably 0.0001% and more preferably 0.001%, in order to obtain the above effects of La.

<Ce: 0.500% or less>

Ce is an element that improves hot workability and cleanliness, and is optionally contained. However, an excessively high Ce content leads to higher production costs and hindrance of producibility. Therefore, the upper limit of the Ce content is controlled to 0.500%, preferably 0.400%, and more preferably 0.300%. On the other hand, the lower limit of the Ce content is not particularly limited, but it is preferably 0.0001% and more preferably 0.001%, in order to obtain the above effects of Ce.

The ferritic stainless steel pipe according to the embodiment has a maximum area of crystal grains having a <110> orientation of 145000 $\mu$m$^2$ or less, preferably 143000 $\mu$m$^2$ or less, more preferably 130000 $\mu$m$^2$ or less, in a cross section perpendicular to the pipe extending direction (a rolling direction of the base metal that makes up the ferritic stainless steel pipe). By controlling the maximum area of the crystal grains in such a range, cracking and deformation upon impact application can be suppressed. This effect can be ensured even in a low temperature environment (e.g., -40°C). Since the smaller the maximum area of the grains, the better it is, the lower limit is not particularly limited, but it is, for example, 1000 $\mu$m$^2$, preferably 2000 $\mu$m$^2$, more preferably 30000 $\mu$m$^2$.

The ferritic stainless steel pipe according to the embodiment of the present invention has an area ratio of crystal grains having a <110> orientation of 21.0% or less, preferably 20.5% or less, and more preferably 20.0% or less, in the cross section perpendicular to the pipe extending direction. By controlling the area ratio of the crystal grains in such a range, cracking and deformation upon impact application can be suppressed. This effect can be ensured even in a low temperature environment (e.g., -40°C). Since the smaller the area ratio of these grains, the better it is, the lower limit is not particularly limited, but it is, for example, 3.0%, preferably 5.0%, and more preferably 10.0%.

Here, the maximum area and the area ratio of the grains having the <110> orientation can be determined by measuring a cross section (RD cross section) of the ferritic stainless steel pipe perpendicular to the pipe extending direction (the drawing direction during the production of the ferritic stainless steel pipe) by EBSD (electron beam back scattering diffraction). This RD cross section may include welded portions. The EBSD is performed by irradiating electron beams with a step size (measurement pitch) of 5.0 $\mu$m or less so that the total cross-sectional area of the measurement field of view is 1500000 $\mu$m$^2$ or more to obtain a crystal orientation map. From the crystal orientation map, a mapping image is created, which is displayed so that the areas with crystal orientation within 15° from the <110> direction can be distinguished from other areas (areas with crystal orientation greater than 15° from the <110> direction). In this mapping image, the areas where the crystal orientation is within 15° from the <110> direction are defined as grains having a <110> orientation.

The maximum area of the grains having the <110> orientation can be calculated by selecting the coarsest grains having the <110> orientation in the mapping image and determining their areas. The area ratio of the grains having the <110> orientation can be calculated by the following equation:

$$\text{Area ratio of grains having <110> orientation (\%) = areas of grains having <110> orientation / area of measurement field of view} \times 100.$$

The ferritic stainless steel pipe according to the embodiment of the present invention preferably has an average crystal grain size of 500 $\mu$m or less, more preferably 400 $\mu$m or less, and even more preferably 250 $\mu$m or less. By controlling the average grain size in such a range, cracking and deformation upon impact application can be stably suppressed. The lower limit of the average grain size is not particularly limited, but it is, for example, 10 $\mu$m, preferably 15 $\mu$m, and more preferably 20 $\mu$m.

Here, the average grain size can be obtained by observing the cross section of the ferritic stainless steel pipe perpendicular to the pipe extending direction (RD cross section) with an optical microscope and converting it from the grain size number obtained by the cutting method defined in JIS G0551: 2013. If the grain size in the observation field of view is extremely coarse or the aspect ratio of the grain size is too large and cannot be determined by this method, the value calculated by the Grain Size Quick Chart of EBSD is defined as the average grain size.

The ferritic stainless steel pipe according to the embodiment of the present invention has a Vickers hardness of 150 HV or more, more preferably 160 HV or more, and even more preferably 170 HV or more. By controlling the Vickers hardness in such a range, cracking and deformation upon impact can be stably suppressed. The upper limit of the Vickers hardness is not particularly limited, but it is 400 HV, preferably 350 HV, and more preferably 300 HV, for example.

Here, the Vickers hardness can be determined by cutting a test piece from the ferritic stainless steel pipe and using a Vickers hardness tester in accordance with JIS Z2244: 2009. At this time, the test force is HV1 (9.807 N). The Vickers hardness is obtained at any five positions, and an average value thereof is determined to be the result.

The ferritic stainless steel pipe according to the embodiment of the present invention preferably satisfies the following equation (1) for the average grain size and the Vickers hardness.

$$490 \times D^{-1/2} + 2.6 \times H / 3 \leq 400 \quad \cdots \quad (1)$$

in which D represents the average crystal grain size and H represents the Vickers hardness.

When the average grain size and the Vickers hardness satisfy the above equation (1), cracking and deformation upon impact can be stably suppressed.

The method for producing the ferritic stainless steel pipe according to the embodiment of the present invention is not particularly limited, but it can use a production method including a welding step of welding both end portions in a width direction of a base metal having the composition as described above to obtain an original pipe, and a drawing step of cold-drawing the original pipe at a reduction of area of 30% or more to extending the original pipe.

The base metal (ferritic stainless steel) having the composition described above can be produced by conventional methods. Specifically, the base metal can be produced by smelting and forging or casting a ferritic stainless steel having the above composition, followed by hot rolling and then cold rolling. The conditions for the hot rolling and the cold rolling can be adjusted depending on the composition of the stainless steel and the like, and are not limited. After the hot rolling and the cold rolling, annealing and acid-washing may be performed as necessary, and these conditions are also not limited. For example, when the annealing is performed after the cold rolling, the annealing is preferably performed at 700-1100°C. If the annealing temperature is less than 700°C, softening and recrystallization of the base metal may be insufficient, and the specified material properties may not be obtained. On the other hand, if the annealing temperature exceeds 1100°C, the crystal grains become coarse, which may lead to inhibition of the toughness and ductility of the base metal.

The thickness of the base metal is not particularly limited, but it is preferably 0.5 to 2.0 mm.

The original pipe can be obtained by forming the base metal in the width direction into a roll shape (roll forming process) and welding both end portions in the width direction of the base metal. Welding methods are not limited, and TIG, MIG, and laser welding can be used. Among them, the TIG welding is preferred from the viewpoint of pipe formability.

After the welding, the original pipe may be heat-treated, although this is not essential. The heat treatment of the original pipe can alleviate segregation. When the heat treatment is performed, the heat treatment temperature is preferably 950°C or less, more preferably 550°C to 950°C, and even more preferably 550°C to 700°C. If the heat treatment temperature exceeds 950°C, the original pipe becomes soft and the desired hardness is difficult to be obtained, and the recrystallized grains may become coarse. If the heat treatment temperature is less than 550°C, brittleness may decrease and it may be difficult to promote refinement by recrystallization.

The drawing process of the original pipe can be performed using a drawing device, although not particularly limited. The drawing process of the original pipe is performed with a reduction of area of 30% or more. If the reduction of area is less than 30%, the maximum area or the area ratio of the crystal grains having the <110> orientation is not sufficiently reduced, leading to difficulty to suppress cracking and deformation when impact is applied in a low temperature environment. Other conditions for the drawing process may be adjusted depending on the composition of the stainless steel and the like, and are not particularly limited. For example, the outer diameter of the drawn ferritic stainless steel pipe may preferably be 5 to 20 mm. By using these conditions, the ferritic stainless steel pipe can be stably produced.

In the method for producing the ferritic stainless steel pipe according to the embodiment of the present invention, the heat treatment may not be performed after the drawing step. Even without the heat treatment after the drawing step, a hard and fine metallurgical structure can be obtained, so that the ferritic stainless steel pipe can be made to suppress cracking and deformation when impact is applied. The omission of the heat treatment can also reduce production costs.

On the other hand, in the method for producing the ferritic stainless steel pipe according to the embodiment of the present invention, a heat treatment step may be performed after the drawing step. When performing the heat treatment, the heat treatment temperature can be the same conditions as those of the heat treatment of the original pipe as described above.

The ferritic stainless steel pipe according to the embodiment of the present invention can be used for various applications where cracking and deformation upon impact application are required, because the ferritic stainless steel pipe according to the embodiment of the present invention had no crack and has less deformation upon impact application even in a low temperature environment (e.g., -40°C). Examples of the applications include fuel cells (e.g., fuel reformers).

The fuel cell according to an embodiment of the present invention includes the ferritic stainless steel pipe according to the embodiment of the present invention. Since the ferritic stainless steel pipe according to the embodiment of the present invention has no crack and has less deformation upon impact application even in the low temperature environment, the fuel cell including this ferritic stainless steel pipe can make it difficult for the function of the ferritic stainless steel pipe to be deteriorated upon impact application even in the low temperature environment.

[Examples]

Hereinafter, the present invention will be described in detail with reference to Examples. However, it should not be construed that the present invention is limited to those Examples.

Stainless steel having each composition as shown in Table 1 (the balance being Fe and impurities) was smelted by vacuum melting and forged, and then hot-rolled to obtain a hot-rolled sheet. The hot-rolled sheet was annealed and washed with an acid, and then cold-rolled and annealed to obtain a cold-rolled annealed steel sheet (base metal) having a thickness of 1.0 mm. The cold-rolled annealed steel sheet was then formed into a roll shape in the width direction, and both end portions in the width direction were TIG-welded to obtain an original pipe having an outer diameter of 7 mm. The original pipe was cold-drawn at a reduction of area of 30% to obtain a ferritic stainless steel pipe having an outer diameter of 6 mm and a thickness of 0.8 mm (Examples 1 to 3 and 5 to 14, and Comparative Examples 3 to 8). Also, a width direction of a cold-rolled annealed steel sheet (base metal) having a thickness of 1.2 mm, which was obtained in the same manner as described above, was formed into a roll shape and both end portions in the width direction were TIG-welded to produce an original pipe having an outer diameter of 8 mm, which was then cold-drawn at a reduction of area of 45% to obtain a ferritic stainless steel pipe having an outer diameter of 6 mm and a thickness of 0.8 mm (Example 4). Further, a width direction of a cold-rolled annealed steel sheet (base metal) having a thickness of 0.9 mm, which was obtained in the same manner as described above, was formed into a roll shape, and both end portions in the width direction were TIG-welded to produce an original pipe having an outer diameter of 6.5 mm, which was then cold-drawn at a reduction of area of 15% to obtain a ferritic stainless steel pipe having an outer diameter of 6 mm and a thickness of 0.8 mm (Comparative Examples 1 and 2). In addition, as shown in Table 2, some ferritic stainless steel pipes were heat-treated at 550°C, 950°C, or 1050°C, in an air atmosphere after the drawing process.

[Table 1]

Table 1

| Steel Nos. | Composition (% by mass) | | | | | | | | | | | | | |
|---|---|---|---|---|---|---|---|---|---|---|---|---|---|---|
| | C | Si | Mn | P | S | Cr | Al | N | B | Sn | Mg | Ca | B+Mg | Others |
| A | 0.007 | 0.4 | 0.25 | 0.030 | 0.0007 | 18.2 | 2.1 | 0.010 | 0.0009 | -- | -- | -- | 0.0009 | -- |
| B | 0.022 | 0.5 | 0.11 | 0.027 | 0.0003 | 18.3 | 1.4 | 0.005 | 0.0034 | -- | -- | -- | 0.0034 | -- |
| C | 0.008 | 0.5 | 0.11 | 0.027 | 0.0005 | 18.2 | 1.5 | 0.006 | 0.0008 | -- | -- | -- | 0.0008 | -- |
| D | 0.009 | 0.6 | 0.18 | 0.013 | 0.0008 | 24.2 | 1.6 | 0.011 | 0.0009 | -- | -- | -- | 0.0009 | -- |
| E | 0.022 | 0.3 | 0.88 | 0.055 | 0.0056 | 14.1 | 4.5 | 0.023 | 0.0010 | -- | -- | -- | 0.0010 | -- |
| F | 0.006 | 2.7 | 0.21 | 0.023 | 0.0006 | 20.1 | 1.3 | 0.013 | 0.0081 | 0.003 | 0.0051 | 0.0021 | 0.0132 | -- |
| G | 0.011 | 0.5 | 0.24 | 0.018 | 0.0006 | 21.1 | 1.8 | 0.013 | 0.0002 | 0.014 | 0.0039 | 0.0019 | 0.0041 | -- |
| H | 0.043 | 1.2 | 0.45 | 0.016 | 0.0031 | 17.5 | 2.1 | 0.009 | 0.0003 | 0.042 | 0.0038 | 0.0009 | 0.0041 | -- |
| I | 0.006 | 0.3 | 0.23 | 0.021 | 0.0007 | 15.1 | 0.8 | 0.010 | 0.0021 | 0.016 | 0.0028 | 0.0023 | 0.0049 | -- |
| J | 0.012 | 0.4 | 0.35 | 0.031 | 0.0012 | 18.1 | 1.8 | 0.015 | 0.0015 | 0.013 | 0.0027 | 0.0012 | 0.0042 | Ti:0.18 |
| K | 0.005 | 0.3 | 0.17 | 0.019 | 0.0006 | 18.0 | 2.0 | 0.008 | 0.0020 | 0.015 | 0.0026 | 0.0025 | 0.0046 | Nb:0.17 |
| L | 0.009 | 0.6 | 0.33 | 0.029 | 0.0011 | 16.8 | 1.4 | 0.012 | 0.0018 | 0.079 | 0.0023 | 0.0018 | 0.0041 | Ni:0.04, Cu:0.03, Ti:0.16 |
| M | 0.014 | 1.7 | 0.22 | 0.029 | 0.0009 | 23.5 | 1.3 | 0.014 | 0.0036 | 0.026 | 0.0013 | 0.0041 | 0.0049 | Ni:0.07, Cu:0.27, Ti:0.18, Zr:0.001, La:0.001 |
| N | 0.009 | 0.6 | 0.29 | 0.022 | 0.0009 | 17.8 | 3.3 | 0.006 | 0.0016 | 0.022 | 0.0033 | 0.0027 | 0.0049 | Ni:0.07, Cu:0.02, Nb:0.02, Ti:0.19, Ce:0.002 |
| O | 0.012 | 0.5 | 0.26 | 0.020 | 0.0008 | 17.8 | 1.4 | 0.007 | 0.0009 | -- | -- | - | 0.0009 | -- |
| P | 0.023 | 1.5 | 0.56 | 0.034 | 0.0009 | <u>26.2</u> | 1.2 | 0.041 | 0.0014 | -- | -- | -- | 0.0014 | <u>Ti:1.01</u> |
| Q | 0.006 | 0.4 | 0.45 | 0.018 | 0.0008 | <u>12.1</u> | 0.8 | 0.010 | <u>--</u> | -- | -- | -- | -- | -- |
| R | 0.005 | 0.5 | 0.21 | 0.021 | 0.0007 | 18.2 | 1.9 | 0.009 | 0.0012 | -- | -- | -- | 0.0012 | Ti:0.18 |
| S | 0.007 | 0.2 | 0.25 | <u>0.061</u> | 0.0007 | 18.2 | 2.1 | 0.010 | 0.0009 | -- | -- | -- | 0.0009 | Nb:0.18 |
| T | <u>0.054</u> | <u>3.1</u> | <u>1.21</u> | 0.033 | <u>0.0108</u> | 14.1 | <u>5.1</u> | <u>0.052</u> | <u>0.0104</u> | -- | -- | -- | 0.0104 | Ti:0.21 |

The underlines indicate that they are outside the scope of the present invention.

The following evaluation were performed on the ferritic stainless steel pipes obtained above.

[Impact Resistance and Deformation Resistance]

The impact resistance and deformation resistance of each of the ferritic stainless steel pipes obtained above were evaluated by performing a drop-weight test at temperatures varying between -40 and 70°C. The drop-weight test was conducted by freely dropping a balance weight of 1 kg from a height of the balance weight of 1 m onto each ferritic stainless steel pipe. In this case, the welded portion of the ferritic stainless steel pipe was placed facing upward so that the impact of the balance weight was applied directly to the welded portion.

For the impact resistance, a temperature at which no cracking occurred for one or more of the three samples in the drop-weight test was defined as a ductile-to-brittle transition temperature. A sample in which the ductile-to-brittle transition temperature was -40°C was evaluated as a double circle (very good: ◎), a sample in which the ductile-to-brittle transition temperature was 0°C was evaluated as a circle (good: o), a sample in which the ductile-to-brittle transition temperature was 24°C or more was evaluated as a cross (poor: x).

The deformation resistance was evaluated by observing the appearance of each sample that did not crack in the drop-weight test. In this evaluation, a sample in which an aspect ratio (transverse diameter/longitudinal diameter) of the pipe diameter orthogonal to the pipe extending direction was 1.0 or more and less than 1.3 was evaluated as a double circle (very good: ◎), a sample in which the aspect ratio was 1.3 or more and less than 1.5 was evaluated as a circle (good: o), and a sample in which the aspect ratio was 1.5 or more was evaluated as a cross (poor: ×).

[Maximum Area and Area Ratio of Grains having <110> Orientation]

A specimen having a length of 5 cm in the rolling direction (drawing direction) was cut from each ferritic stainless steel pipe after the drop-weight test.

The specimen was then cut out at a portion having a length of 1 cm in the rolling (drawing) direction from the end portion, embedded in a resin so that the RD cross section was exposed, and then polished with colloidal silica to make a sample for EBSD measurement.

The sample was then used to determine the maximum area and the area ratio of the grains having the <110> orientation according to the method as described above. In the EBSD measurement, the total cross-sectional area in the measurement field of view was about 1650000 $\mu m^2$ and the step size (measurement pitch) was less than 2.5 $\mu m$.

[Average Grain Size].

The above sample for EBSD measurement was etched with inverse aqua regia to form a sample for observation with an optical microscope.

This sample was then used for observation with optical microscopy according to the method as described above, and the average grain size was determined.

[Vickers Hardness]

A specimen for Vickers hardness measurement was cut from each ferritic stainless steel pipe after the drop-weight test, and the Vickers hardness was determined according to the method as described above.

The results of each of the above evaluations are shown in Table 2.

[Table 2]

Table 2

| | Steel Nos. | Drawing Step Reduction of Area (%) | Heat Treatment Step after Drawing Step Presence or Absence of Operation | Heat Treatment Temperature (°C) | Crystal Grains having <110> Orientation maximum area (μm²) | Area Ratio (%) | Average Grain Size (μm) | Vickers Hardness (HV) | Value of Equation (1) | Impact Resistance | Deformation Resistance |
|---|---|---|---|---|---|---|---|---|---|---|---|
| Ex. 1 | A | 30 | Absent | -- | 53100 | 18.9 | 257 | 256 | 252 | ○ | ○ |
| Ex. 2 | B | 30 | Absent | -- | 45600 | 18.6 | 227 | 291 | 285 | ○ | ○ |
| Ex. 3 | C | 30 | Present | 950 | 132600 | 20.1 | 354 | 156 | 161 | ○ | ○ |
| Ex. 4 | C | 45 | Present | 950 | 101500 | 17.3 | 278 | 162 | 170 | ○ | ○ |
| Ex. 5 | D | 30 | Absent | -- | 19200 | 15.6 | 161 | 249 | 254 | ○ | ◎ |
| Ex. 6 | E | 30 | Present | 950 | 112700 | 19.8 | 298 | 176 | 181 | ○ | ◎ |
| Ex. 7 | F | 30 | Present | 550 | 16700 | 12.1 | 143 | 227 | 238 | ◎ | ◎ |
| Ex. 8 | G | 30 | Absent | -- | 40400 | 12.3 | 215 | 244 | 245 | ○ | ○ |
| Ex. 9 | H | 30 | Present | 950 | 112400 | 17.7 | 342 | 171 | 175 | ○ | ○ |
| Ex. 10 | I | 30 | Absent | -- | 49300 | 16.2 | 175 | 166 | 181 | ○ | ○ |
| Ex. 11 | J | 30 | Absent | -- | 38800 | 14.2 | 182 | 289 | 287 | ◎ | ◎ |
| Ex. 12 | K | 30 | Absent | -- | 36000 | 16.5 | 185 | 258 | 260 | ◎ | ◎ |
| Ex. 13 | L | 30 | Present | 550 | 67200 | 16.5 | 185 | 171 | 184 | ◎ | ◎ |
| Ex. 14 | M | 30 | Absent | -- | 10800 | 14.7 | 64 | 198 | 233 | ◎ | ◎ |
| Ex. 15 | N | 30 | Present | 950 | 72300 | 18.1 | 266 | 201 | 204 | ◎ | ◎ |
| Comp. 1 | A | 15 | Absent | -- | 64500 | 23.0 | 312 | 202 | 189 | × | × |
| Comp. 2 | C | 15 | Present | 950 | 161000 | 24.0 | 413 | 187 | 186 | × | × |
| Comp. 3 | O | 30 | Present | 1050 | 270000 | 22.8 | 556 | 156 | 156 | × | × |
| Comp. 4 | P | 30 | Absent | -- | 11300 | 19.3 | 64 | 401 | 409 | × | × |
| Comp. 5 | Q | 30 | Absent | -- | 20700 | 16.7 | 146 | 169 | 187 | × | × |
| Comp. 6 | R | 30 | Present | 1050 | 146700 | 21.4 | 323 | 183 | 186 | × | × |
| Comp. 7 | S | 30 | Present | 1050 | 152000 | 20.1 | 430 | 187 | 186 | × | × |
| Comp. 8 | T | 30 | Absent | -- | 26800 | 15.6 | 71 | 456 | 453 | × | × |

The underlines indicate that they are outside the scope of the present invention.

As shown in Table 2, the ferritic stainless steel pipes according to Examples 1 to 15, which had the specified composition and the maximum area and area fraction of the grains having the <110> orientation within the specified ranges, had good impact resistance and good deformation resistance.

In contrast, the ferritic stainless steel pipes according to Comparative Examples 1 and 2 did not have the desired impact resistance and deformation resistance because the maximum area or the area ratio of the crystal grains having the <110> orientation was outside the predetermined range due to the reduction of area in the drawing step of less than 30%.

In the ferritic stainless steel pipes according to Comparative Examples 3 and 6, the heat treatment temperature was too high in the heat treatment step after the drawing step, so that the maximum area and the area ratio of the crystal grains having the <110> orientation were outside the specified ranges, and the desired impact resistance and deformation resistance were not obtained.

In the ferritic stainless steel pipe according to Comparative Example 4, the Cr and Ti contents were too high, so that a large amount of hard TiN was generated, and the desired impact resistance and deformation resistance were not obtained.

The ferritic stainless steel pipe according to Comparative Example 5 had the excessively low Cr content and did not contain B, so that grain boundary strength could not be increased, and the desired impact resistance and deformation resistance were not obtained.

The ferritic stainless steel pipe according to Comparative Example 7 had the excessively high P content and underwent the excessively high heat treatment temperature in the heat treatment step after the drawing step, so that the maximum area of the crystal grains having the <110> orientation was outside the specified range and the desired impact resistance and deformation resistance were not obtained.

The ferritic stainless steel pipe according to Comparative Example 8 did not have the desired impact resistance and deformation resistance because the contents of C, Si, Mn, S, Al, N, and B were outside the predetermined range.

As can be seen from the above results, according to the present invention, it is possible to provide a ferritic stainless steel pipe that is free from cracking and less deformed upon impact application even in low temperature environments, and a method for producing the same. Also, according to the present invention, it is possible to provide a fuel cell in which the function of the ferritic stainless steel pipe is difficult to be degraded upon impact application even in low temperature environments.

**Claims**

1. A ferritic stainless steel pipe having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, and B: 0.0001 to 0.0100%, the balance being Fe and impurities,
wherein, in a cross section of the ferritic stainless steel pipe perpendicular to a pipe extending direction, an area ratio of crystal grains having a <110> orientation is 21.0% or less, and a maximum area of the crystal grains is 145,000 $\mu$m$^2$ or less.

2. The ferritic stainless steel pipe according to claim 1, wherein the ferritic stainless steel pipe has an average crystal grain size of 500 $\mu$m or less and a Vickers hardness of 150 HV or more, and satisfies the following equation (1):

$$490 \times D^{-1/2} + 2.6 \times H / 3 \leq 400 \quad \cdots \quad (1)$$

in which D represents the average crystal grain size and H represents the Vickers hardness.

3. The ferritic stainless steel pipe according to claim 1 or 2, further comprising, on a mass basis, one or more selected from Sn: 0.100% or less, Mg: 0.0100% or less, and Ca: 0.0100% or less.

4. The ferritic stainless steel pipe according to claim 3, wherein the ferritic stainless steel pipe comprises, on a mass basis, Si: 0.3 to 2.0%, Cr: 16.0 to 19.0%, Al: 1.3 to 3.3%, B: 0.0001 to 0.0049%, Sn: 0.001 to 0.100%, Mg: 0.0001 to 0.0049%, Ca: 0.0001 to 0.0050%, and the total amount of B and Mg is 0.0040 to 0.0050%.

5. The ferritic stainless steel pipe according to any one of claims 1 to 4, further comprising, on a mass basis, Ni: 1.00% or less, Cu: 1.00% or less, Nb: 1.00% or less, Ti: 1.00% or less, Zr: 0.500% or less, La: 0.500% or less, and Ce: 0.500% or less.

6. The ferritic stainless steel pipe according to any one of claims 1 to 5, wherein the ferritic stainless steel pipe is used for a fuel cell.

7. A method for producing a ferritic stainless steel pipe, the method comprising:

a welding step of welding both end portions in a width direction of a base metal to obtain an original pipe, the base metal having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, B: 0.0001 to 0.0100%, the balance being Fe and impurities; and
a drawing step of cold-drawing the original pipe at a reduction of area of 30% or more to extend the original pipe, wherein a heat treatment step is not performed after the drawing step.

8. A method for producing a ferritic stainless steel pipe, the method comprising:

a welding step of welding both end portions in a width direction of a base metal to obtain an original pipe, the base metal having a composition comprising, on a mass basis, C: 0.050% or less, Si: 3.0% or less, Mn: 1.00% or less, P: 0.060% or less, S: 0.0100% or less, Cr: 14.0 to 25.0%, Al: 5.0% or less, N: 0.050% or less, B: 0.0001 to 0.0100%, the balance being Fe and impurities;

a drawing step of cold-drawing the original pipe at a reduction of area of 30% or more to extend the original pipe; and

a heat treatment step of performing a heat treatment at a temperature of 950°C or less after the drawing step.

9. The method for producing a ferritic stainless steel pipe according to claim 7 or 8, wherein the base metal further comprises, on a mass basis, one or more selected from Sn: 0.100% or less, Mg: 0.0100% or less, and Ca: 0.0100% or less.

10. The method for producing a ferritic stainless steel pipe according to claim 9, wherein the base metal comprises, on a mass basis, Si: 0.3 to 2.0%, Cr: 16.0 to 19.0%, Al: 1.3 to 3.3%, B: 0.0001 to 0.0049%, Sn: 0.001 to 0.100%, Mg: 0.0001 to 0.0049%, Ca: 0.0001 to 0.0050%, and the total amount of B and Mg is 0.0040 to 0.0050%.

11. The method for producing a ferritic stainless steel pipe according to any one of claims 7 to 10, further comprising, on a mass basis, Ni: 1.00% or less, Cu: 1.00% or less, Nb: 1.00% or less, Ti: 1.00% or less, Zr: 0.500% or less, La: 0.500% or less, and Ce: 0.500% or less.

12. A fuel cell comprising the ferritic stainless steel pipe according to any one of claims 1 to 6.

## INTERNATIONAL SEARCH REPORT

| International application No. |
| --- |
| **PCT/JP2022/032432** |

**A. CLASSIFICATION OF SUBJECT MATTER**

*C21D 8/10*(2006.01)i; *C22C 38/00*(2006.01)i; *C22C 38/34*(2006.01)i; *C22C 38/54*(2006.01)i
FI: C22C38/00 302Z; C22C38/34; C21D8/10 D; C22C38/54

According to International Patent Classification (IPC) or to both national classification and IPC

**B. FIELDS SEARCHED**

Minimum documentation searched (classification system followed by classification symbols)

C21D8/10; C22C38/00; C22C38/34; C22C38/54

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-173070 A (NIPPON STEEL NISSHIN CO., LTD.) 10 October 2019 (2019-10-10) | 1-12 |
| A | JP 2019-002053 A (NIPPON STEEL & SUMIKIN STAINLESS STEEL CORP.) 10 January 2019 (2019-01-10) | 1-12 |
| A | JP 2002-155345 A (NIPPON STEEL CORP.) 31 May 2002 (2002-05-31) | 1-12 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 October 2022** | **08 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/032432**

| Patent document cited in search report | | | Publication date (day/month/year) | Patent family member(s) | Publication date (day/month/year) |
|---|---|---|---|---|---|
| JP | 2019-173070 | A | 10 October 2019 | (Family: none) | |
| JP | 2019-002053 | A | 10 January 2019 | (Family: none) | |
| JP | 2002-155345 | A | 31 May 2002 | (Family: none) | |

Form PCT/ISA/210 (patent family annex) (January 2015)

**REFERENCES CITED IN THE DESCRIPTION**

**Patent documents cited in the description**

- JP 2010222638 A
- WO 2015064739 A1
- JP 2016030854 A
- JP 2016030855 A
- JP 2016211076 A
- WO 2017073093 A1
- WO 2017073094 A1